# EUROPEAN PATENT SPECIFICATION

(11) **EP 0 956 751 B1**
(45) Date of publication and mention of the grant of the patent: **03.09.2003**
(21) Application number: 96929599.7
(22) Date of filing: 05.06.1996
(51) Int. Cl.: A01B 1/00, C02F 1/68, C02F 1/40, C02F 1/28

(54) **METHOD FOR CLEANING SURFACES CONTAMINATED BY CRUDE OIL OR PETROLEUM PRODUCT SPILLS, ADSORBANT FOR CLEANING SURFACES AND METHOD FOR PRODUCING THE SAME**
VERFAHREN ZUR REINIGUNG VON OBERFLÄCHEN DIE DURCH BE- ODER UNBEARBEITETE ÖLPRODUKTE VERSCHMUTZT SIND, ADSORPTIONSMITTEL ZUR REINIGUNG VON OBERFLÄCHEN UND VERFAHREN ZUR HERSTELLUNG DESSEN
PROCEDE DE NETTOYAGE DE SURFACES CONTAMINEES PAR DU PETROLE BRUT OU DES PRODUITS PETROLIERS, ADSORBANT POUR LE NETTOYAGE DE SURFACES ET SON PROCEDE DE PREPARATION

(43) Date of publication of application: 17.11.1999
(73) Proprietor: Ivanov, Vitaly Davydovich, moscow 121165 (RU)
(72) Inventor: Ivanov, Vitaly Davydovich, moscow 121165 (RU)
(74) Representative: Curtis, Philip Anthony
(86) International application number: PCT/RU96/00148
(87) International publication number: WO 98/014404

(56) References cited:
- WO-A-95/23041
- FR-A- 2 022 296
- GB-A- 1 041 205
- GB-A- 1 352 328
- GB-A- 1 417 960
- PATENT ABSTRACTS OF JAPAN vol. 010, no. 139 (C-348), 22 May 1986 (1986-05-22) & JP 61 000284 A (TATSU AMAIKE;OTHERS: 01), 6 January 1986 (1986-01-06)

## Description

The invention relates to methods of adsorption cleaning of different surfaces, including water and land surfaces, polluted by spills of oil and oil products, and also to adsorbents for water cleaning, methods of their production, and can be used to prevent ecological catastrophes.

### THE PREVIOUS LEVEL OF TECHNOLOGY

Among the most important tasks in the area of cleaning of oil and oily products pollution from different surfaces are creation of a highly efficient and cheap method of gathering oil, of an adsorbent; and also of a method of producing an adsorbent. They provide for localization of spills of oil and oil products by binding a spill into a lumpy mass which can be easily gathered by mechanical means, keeps on surface, and does not significantly move. In case of a land spill, the method must provide localization of a spill, binding it into a lumpy mass easily removable by mechanical means, and prevention of penetration of oil to underground water. The method must provide the degree of cleaning of water surfaces up to 99%. The method must also provide a possibility of regeneration of oil or oil product gathered by the adsorbent. Implementation of the method must not require any special new technology. The method enables long preservation of the adsorbent; besides, a necessary quantity of the adsorbent can be prepared where it is applied.

There are known a number of methods of cleaning or oil and oil products from water surfaces, which are based of an using of adsorbents. FR 2 022 296 describes a procedure for removing mineral oils from water surfaces.

Other known methods utilize adsorbents which are porous construction materials (slag, expanded perlite, brick crumb, expanded clay aggregate, vermiculite) treated for water repellency by vapours of residual fuel oil, tar, bitumen, or technical oils (I).

The methods which use these kinds of adsorbents provide a high degree of cleaning of oil products from water surfaces.

When these methods are used, the adsorbent is regenerated by transmission of a gaseous heat-transfer agent at 180-350°C within 30 minutes.

A disadvantage of the methods using construction materials and wastes treated for water repellency is their quite complicated technology, including both the process of water repellency treatment, and complexity of applying the adsorbent to a spill of oil or oil products, especially if a spill is large enough.

Besides, in practice this method suggests using water-repellency treatment process straight at a catastrophe site.

Another known method uses an adsorbent which represents a kind of glass wool made of liquid glass and impregnated by silicon oil which contains SiOH group to increase affinity of silicon oil and glass. [2] A disadvantage of this method is its high cost.

Another method uses as an adsorbent empty glass xenospheres with apparent density 50 to 200 g/cm³, treated for water repellency by 2-20% solution of methylchlorinesilane, dimethyldichlorinesilane, mineral acids or a mix of these products for total neutralization of alkaline groups of glass. [3]

A method of gathering of spills of oil and oil products based on this kind of an adsorbent is very expensive and technically complicated because empty glass xenospheres are produced by way of thermal blowing-out under pressure of liquid glass with particular relationship and particular density, and further processing by expensive products (silanes).

There is another known method of cleaning oil products from oil surfaces. It is transmission of water with an addition of residual fuel oil through an adsorbent, which is an aerosilica gel exposed to water-repellency treatment by gasified marine residual oil, bitumen, or technical oils with a following transmission of a gaseous heat-transfer agent at 180°C for 80 minutes. Residual oil is leaking out of the adsorbent for 40 minutes. Residual fuel oil capacity of the adsorbent decreases 4%. [4]

Disadvantages of the method are complicated equipment, high power intensity of the adsorbent.

Besides, there is known an adsorbent adsorbing oil pollutions, which represents a homogenous mixture of an aluminosilicate material (bloated vulcanized glass), cellulose fiber material (newsprint or craft-paper, flax combings, wood chip) and water repellent impregnator material is a waste of burning coal dust in industrial furnaces with liquid slag removal; water-repelling agents are waste products or sub-products of oil, chemical industry, or wood chemistry, and liquid water-repellents at mass relation of waste 1 : 0.01-0.25.

The adsorbent is regenerated by 1-25% solution of ammonia by way of stirring components at 20-90°C and hard : liquid relation =1:2-1,5 with further recovery of floated up aluminosilicate material for repeated use.

The task is also solved by this method of making composite adsorbent, in which water repellent (a waste or sub-product of oil, chemical industry or wood chemistry) is applied in a form of water emulsion or water solution. Stirring is done in a reactor, relation of aluminosilicate material, water and water repellent is respectively 1:1-5:0.001-0.25, at temperature 40-96°C, for 20-45 minutes with following drying to constant weight at 105-120°C.

To increase adsorption capacity, it is expedient to use as a water repellent waste oil asphalt, rosin, tall pitch, tall oil, water repellent liquids, petroleum polymer acids, and so on.

Alumonosilicate ingredient of the composite adsorbent is xenospheres - an element of fly ash wastes, which appear as a result of burning coal dust in industrial furnaces with liquid slag removal.

Xenospheres are a gray powder consisting of empty spherical particles. Their shell is non-porous silicate glass, thickness of a shell is about 0,1 of a sphere's radius.

Xenospheres are chosen as a basis for a composite adsorbent (bitumen, pitch, siloxane, or silane). [5]

This composition can be also used to clean oil from water surfaces; or it can be used as a strata through which water polluted with oil is filtrated, but its efficiency is not high enough and not all the ingredients are always available.

There is a method of producing an adsorbent for cleaning oil from water surfaces using sawdust which is treated by melt of hydrophobic filler; emersion oil which is a waste of thermal processing of wood is used as a filler. [6]

Treatment is done by mixing hot (50-80°C) original ingredients taken in mass relation oil: sawdust 0,5-2 : 1. A waste that has not been previously used is utilized in this adsorbent, but its efficiency is not enough for gathering oil from water surfaces.

### OPENING OF THE INVENTION

At the basis of the invention there is a goal to develop a highly efficient and cheap method of cleaning surfaces polluted by oil or oil products by means of qualitative and quantitative selection of ingredients of the composite adsorbent, which not only provides a high degree of cleaning, but also achieves this result by using cheap products - wastes or sub-products.

This goal is achieved by a method of cleaning of oil and oil products from surfaces using an adsorbent which is an aluminosilicate material exposed to water-repellency treatment. The aluminosilicate because of their specific physical properties, their availability in large quantities, and low cost.

As a rule, xenospheres have the following qualitative-quantitative composition, % mass: SiO₂ 60-63; Al₂O₃ 25-29; Fe₂O₃ 2.2; Na₂O + K₂O 2-3; CaO 1.78; MgO 0.3.

Diameter of xenospheres varies from 30 to 400 micron, apparent density is 0.550-0.750 g/cm³, bulk density - 0.35-0.4 g/cm³. Destruction under hydrostatic pressure 10 Pa is 0.8-12.0%. Temperature of caking is 1400-1600°C, temperature of melting is 1250-1400°C.

Due to these characteristics xenospheres are an ideal base of a composite adsorbent. Their physical properties let them keep on water and land surface oil saturated adsorbent, their size and strength let using for their spread standard rotor technology, and low density allows to arrange an efficient processes of regeneration of used adsorbent.

Xenospheres are hydrophilic, that's why in order to use them as adsorbents of oil and oil products they need to be subjected to water-repellency treatment. They are treated by low-concentration water emulsions or water solutions of water-repelling agent. Due to this treatment on one hand, xenospheres acquire adsorbent property; on the other hand, they stay as a fine powder convenient for the process of application on a spill.

Wastes like hydrocarbons can be used as a water repellent component, for example:

Petroleum paraffin, which is a mixture of saturated hydrocarbons with an open chain row from C₁₉H₄₀ to C₃₅H₇₂ with temperature of melting °C 49.0-72.0.

Ceresin - homogeneous wax product, which consists of higher-molecularity substances than paraffin. Differs from paraffin by size of crystals and higher temperature of melting (57-85°C);

It can be also petroleum remainders - a product of oil processing which represents a mixture of hard oil paraffins.

All these substances for water-repellent treatment of hydrophilic surfaces of xenospheres are used in a form of water emulsions. The most efficient water-repelling agent for this goal is petroleum paraffin.

Besides, different bitumen oil wastes can be used in a form of water emulsion.

The most efficient water repellent agent for this goal is heavy paving bitumen. Use of construction or roof bitumen is also possible.

Some wastes of wood chemistry which also contain hydrocarbons can be efficiently used as water repellent agents.

For example, gum rosin consists of resin acids with a common formula C₂₀H₃₀O₂ and represents glassine brittle mass with temperature of melting 55°C;

Tall pitch saponificated - a sub-product of sulfate cellulose production, temperature of softening 53°C;

Tall oil - a product of sulfate cellulose production, represents a mixture of fat and resin acids;

Sulfate soap and sulfite soap - secondary wastes of sulfate and sulfite cellulose production.

Most of wood chemistry wastes (especially tall pitch and tall oil) are used for water repellency treatment of xenospheres in a form of water emulsion.

Water repellent agents which were named enable to create various modifications of the adsorbent, which are different in costs and complexity of production technologies; they can be adapted for different regions of extraction and transportation of oil and oil products.

Irrespective of which water repellent agent is used, composite adsorbent is made by the same scheme:

Usually xenospheres are gathered at ash dumps of power stations, washed, and xenospheres with 50% moisture content are dried in a centrifuge until the necessary percent of dumpiness. After drying, xenospheres can be sorted by particles size, if it is necessary.

Water repellency treatment can easily fit into this technological process as a substitute for the stage of washing after natural drying. Water repellent agents interact with xenospheres in a form of water emulsions or water solutions. It makes the process of getting hydrophobic xenospheres quite simple, safe, and mobile.

Xenospheres are treated by water emulsions or water solutions of water repellents in a reactor with frame stirring, weight relation of the components is 1: 0.001-0.25.

Using of bitumen emulsion, tall pitch, water repelling liquids does not bring in any significant demands to temperatures of stirring and drying.

To prepare water emulsions of water repellents it is necessary to use emulsifying agents - surface-active substances.

As emulsifying agents are used:
High molecular acids, for example, olein acid, a transparent liquid with density 0.91 and a general formula C₁₇H₃₃COOH;
Concentrate of sulfite-yeast ferment, which is gotten out of malt-residue at sulfite-alcohol production. It is a mixture of potassium and sodium (ammonium) salts of ligno-sulphonate acids. Concentrate is produced in a liquid form (contents of dry substances is 50%) and in a hard form (contents of dry substances is 70%);
Cube remainders of synthetic fat acids, or synthetic fat acids (SFA).
Number of carbon atoms - C₁₇-C₂₀
Acid number - 195-230 mg/g.

When SFA are used as emulsifying agents, emulsions are prepares in a solution of caustic potash.

Preparing of bitumen emulsion is more complicated and demands special equipment (an apparat of rotor-pulsate type) and double emulsifying agent.
a) SFA+KOH
b) sulfanol
c) liquid sodium glass.

For regeneration the used adsorbent is gathered, mixed with water solution of ammonia, concentration 1-25% mass, temperature 20-90°C, relation hard: liquid 1:2-1.5. The lower layer of oil product is separated, and floated up xenospheres are used again.

This regeneration method enables full gathering and separation from the adsorbent of the adsorbed oil products.

### THE BEST VARIANT OF IMPLEMENTATION OF THE INVENTION

### Example 1.

To 100 grams of dry xenospheres 500 grams of water emulsion of tall pitch, containing 0.005 gram of tall pitch, are added; they are mixed for 20-25 minutes at temperature 40-45°C. The obtained mixture in laboratory conditions is evaporated to 20-15%, and then dried further at a centrifuge. Xenospheres treated by tall pitch can be also dried on trays at temperature not higher than 100°C. The obtained adsorbent has the following relation of components: xenospheres : tall pitch = 1 : 0.005 mass.

By a similar way adsorbents can be made of xenospheres with bitumen, bitumen-latex composition, oil-polymer resins, water repelling liquids, and so on.

### Example 2.

Gathering oil and oil products from land surface.

Adsorption of oil or oil product is defined by way of weighing. Adsorption activity of the adsorbent is defined separately for oil spill on land and oil spill on water surface.

An oil spot weighing 4.19 gram is applied to a glass weighing 29.58 gram. The total weight of the glass with the oil is 33.77 g. A sample 4.87 g of the adsorbent (xenospheres treated for water repellency by 5% emulsion of water repellent liquid) is applied to the oil until it is fully adsorbed. Sorption capacity is 1.07. The adsorbent is xenospheres exposed to water-repellent treatment by 5% emulsion of tall pitch. Weight of a glass is 29.59 g, weight of an oil spot -4.11 g, weight of the adsorbent - 3.96 g. Sorption capacity - 1.03.

The same experiment, this time with xenospheres exposed to water-repellency treatment by 3% water emulsion of paving bitumen. Weight of a glass - 29.59 g, weight of the glass with oil - 34.16 g, weight of the glass with oil adsorbed by a sample of the adsorbent - 39.27 g. Adsorption capacity - 0.86.

Thus, adsorption capacity of the adsorbent gathering land spills, irrespective of a method of water-repellent treatment, is close to 1, or 1 g of the adsorbent adsorbs 1 g of oil or oil product.

### Example 3.

Gathering oil or an oil product from water surface.

Petri cup is filled with water and weight; then an oil spot is applied on water surface in such a way, that it does not touch the cup walls. A sample of adsorbent is applied on the oil spot until it is fully adsorbed, and the dish is weight again. Oil product weight added to the adsorbent weight provides indication of the adsorbing capacity of the adsorbent.

Weight of a dry cup is 134.15 g, weight of the cup with water is 178.93 g. Weight of an oil spot is 0.4 g, weight of the cup with water and oil is 179.33 g. After processing of the oil spot by a sample of 0.04 g adsorbent of xenospheres treated for water-repellency by 5% water emulsion of hydrophobic liquid GKZh-94, weight of the cup became 179.37 g. Sorption capacity - 10.0. Weight of the cup with water-173.44 g, and with water and an oil spot -173.90 g. After an application of a sample of 0.22 g of the adsorbent, xenospheres treated for water repellency by 5% solution of tall pitch, the oil spot was adsorbed. Adsorption capacity of this adsorbent was 5 to 1, or 1 g of the adsorbent can adsorb 5 grams of oil.

After the experiment was repeated, but with stirring of oil and adsorbent, the oil spot was adsorbed by 0.05 g of the adsorbent, which means that the adsorption capacity grew up to 9-10.

The same experiment with xenospheres treated by 3% water emulsion of bitumen gave the following results.

Weight of a cup with water - 186.76 g. Weight of the cup with water and 0.47 g. oil spot - 187.23 g. Weight of a sample of the adsorbent - 0.15 g. Adsorption capacity is 3.

### Example 4.

To 100 g of dry xenospheres 100 g of water emulsion of paving bitumen containing 25 g of bitumen is added; they are mixed and an adsorbent is extracted. Contents of the adsorbent is xenospheres : bitumen = 1: 0.25. The obtained adsorbent is poured to a reservoir of water with 400 g of oil on its surface; in 20 minutes the adsorbent with the adsorbed oil is gathered. The degree of cleaning of water surface is 99.9%.

524,6 g of the product obtained as a result of gathering of oil from water surface (contents of the product is: xenospheres - 100 g, bitumen- 25 g, oil - 399.6 g) are stirred with 1040 milliliter 25% solution of ammonia at 20°C. As a result, 420 g of oil product and 98.2 g of dry xenospheres is extracted for a repeated use.

Thus, the invention enables to get cheap accessible adsorbent with a capacity from 1g to 10 g of oil product for 1 g of the adsorbent.

### INDUSTRIAL APPLICABILITY

The invention is simple in its implementation and cheap because of using of industrial waste products and simplicity of regeneration process. The method is fire-proof, non-toxic, does not enter into chemical reactions. Its usage does not pollute fresh and sea water. When it is used on water surfaces, with further regeneration, cost of extracted oil covers cost of the adsorbent applied; on land spills, it decreases the cost to ¼.

## Claims

1. A method for cleaning spills of oil and oil products from surfaces, comprising: the treating of a polluted surface with a composite adsorbent, the composite adsorbent comprising an aluminosilicate material formed as a waste product from the burning of coal dust in industrial furnaces with liquid slag removal, wherein thealuminosilicatematerialhasbeentreatedwithahydrocarbon-based water-repellent, formed as waste products of wood chemistry or the oil industry, the mass relationship of aluminosilicate material to water repellent being 1:0.001-0.25; separating the oil product from the adsorbent by stirring the used adsorbent with an aqueous solution of ammonia having a concentration of 1-25%, at a temperature of 20-90°C, and a ratio of adsorbent to aqueous ammonia of 1:2-1.5; and extracting the separated aluminosilicate material from the surface of the aqueous ammonia.

2. A method according to claim 1, wherein the hydrocarbon-based water-repellent is selected from: petroleum paraffin; ceresin; construction, paving and roof petroleum bitumen, formed as wastes of the oil industry.

3. A method according to claim 1, wherein the hydrocarbon-based water-repellent is selected from: gum rosin, tall pitch, tall oil, sulphate soap, sulphite soap, formed as wastes of wood chemistry.

4. An adsorbent for cleaning spills of oil and oil products, wherein the adsorbent material is capable of floating on a surface of a body of water, the adsorbent comprising: an aluminosilicate material formed as a waste product from the burning of coal dust in industrial furnaces with liquid slag removal, wherein the aluminosilicate material is treated with a saturated hydrocarbon-based water-repellent formed as waste products of wood chemistry or the oil industry, the mass relationship of aluminosilicate material to water repellent being 1:0.001-0.25.

5. An adsorbent according to claim 4, wherein the aluminosilicate material consists of hollow spherical glass particles.

6. An adsorbent according to claim 4 or 5, wherein the aluminosilicate material comprises 60-63 weight% SiO₂ and 20-25 weight% Al₂O₃.

7. An adsorbent according to claim 5 or 6 wherein the particles of aluminosilicate material have a diameter of 30 - 400 microns.

8. An adsorbent according to claim 4, 5, 6 or 7, wherein the aluminosilicate material has a melting point in the range 1250 - 1400°C.

9. An adsorbent according to any one of claims 4 to 8, wherein the aluminosilicate material has an apparent density of 0.550 - 0.750 g/cm³, and a bulk density of 0.35 - 0.4 g/cm³.

10. A method of manufacturing an adsorbent for cleaning oil and oil products from surfaces, the method comprising the steps of: treating an aluminosilicate material with a aqueous solution or emulsion of a hydrocarbon based water repellent agent at a temperature of 40-96°C, wherein the aluminosilicate material has been formed as waste as a result of the burning of coal dust in industrial furnaces, with liquid slag removal, and the water repellent treatment comprises hydrocarbons formed as wastes of the oil industry or wood chemistry industry; the ratio of aluminosilicate material to water to water repellent agent being 1:(1-5):(0.001-0.25) respectively; and drying the water repellent-treated aluminosilicate material to constant weight at a temperature of 100-120°C.

## Patentansprüche

1. Verfahren zur Reinigung von Ölverschüttungen und Ölprodukten von Oberflächen, umfassend: Die Behandlung einer verschmutzten Oberfläche mit einem zusammengesetzten Adsorptionsmittel, wobei das zusammengesetzte Adsorptionsmittel ein Aluminosilikatmaterial umfasst, gebildet als ein Abfallprodukt aus dem Verbrennen von Kohlenstaub in Industrieöfen mit Entfernung von füssiger Schlacke, worin das Aluminosilikatmaterial mit einem auf Kohlenwasserstoff basierenden wasserabstoßenden Mittel behandelt wurde, gebildet als Abfallprodukte der Holzchemie oder der Ölindustrie, wobei die Massenbeziehung von Aluminosilikatmaterial zu wasserabstoßendem Mittel 1 : 0,001 - 0,25 beträgt; Trennen des Ölproduktes aus dem Adsorptionsmittel durch Rühren des verwendeten Adsorptionsmittels mit einer wässrigen Ammoniaklösung mit einer Konzentration von 1 - 25 % bei einer Temperatur von 20 - 90 °C und einem Verhältnis von Adsorptionsmittel zu wässrigem Ammoniak von 1 : 2 - 1,5; und Extrahieren des getrennten Aluminosilikatmaterials aus der Oberfläche des wässrigen Ammoniaks.

2. Verfahren nach Anspruch 1, worin das auf Kohlenwasserstoff basierende wasserabstoßende Mittel ausgewählt wird aus: Erdöl auf Paraffinbasis; Ceresin; Erdölbitumen für Konstruktion, Straßendecken und Dächer, gebildet als Abfälle der Ölindustrie.

3. Verfahren nach Anspruch 1, worin das auf Kohlenwasserstoff basierende wasserabstoßende Mittel ausgewählt wird aus: Balsamharz, Tallölpech, Tallöl, Sulfatseife, Sulfitseife, gebildet als Abfälle der Holzchemie.

4. Adsorptionsmittel zum Reinigen von Ölverschüttungen und Ölprodukten, worin das adsorptionsfähige Material zum Schwimmen auf einer Oberfläche eines Wasserkörpers in der Lage ist, wobei das Adsorptionsmittel Folgendes umfasst: Ein Aluminosilikatmaterial, gebildet als ein Abfallprodukt aus dem Verbrennen von Kohlenstaub in Industrieöfen mit Entfernung von flüssiger Schlacke, worin das Aluminosilikatmaterial mit einem gesättigten auf Kohlenwasserstoff basierenden wasserabstoßenden Mittel behandelt wird, gebildet als Abfallprodukte der Holzchemie oder der Ölindustrie, wobei die Massenbeziehung von Aluminosilikatmaterial zu wasserabstoßendem Mittel 1 : 0,001 - 0,25 beträgt.

5. Adsorptionsmittel nach Anspruch 4, worin das Aluminosilikatmaterial aus hohlen sphärischen Glaspartikeln besteht.

6. Adsorptionsmittel nach Anspruch 4 oder 5, worin das Aluminosilikatmaterial 60 - 63 Gew.-% SiO₂ und 20 - 25 Gew.-% Al₂O₃ umfasst.

7. Adsorptionsmaterial nach Anspruch 5 oder 6, worin die Partikel aus Aluminosilikatmaterial einen Durchmesser von 30 - 400 Mikron aufweisen.

8. Adsorptionsmittel nach Anspruch 4, 5, 6 oder 7, worin das Aluminosilikatmaterial einen Schmelzpunkt in dem Bereich von 1250 - 1400 °C aufweist.

9. Adsorptionsmittel nach einem der Ansprüche 4 bis 8, worin das Aluminosilikatmaterial eine scheinbare Dichte von 0,550 - 0,750 g/cm³ und eine Schüttdichte von 0,35 - 0,4 g/cm³ aufweist.

10. Verfahren zum Herstellen eines Adsorptionsmittels zum Reinigen von Öl und Ölprodukten von Oberflächen, wobei das Verfahren die folgenden Schritte umfasst: Behandeln eines Aluminosilikatmaterials mit einer wässrigen Lösung oder Emulsion eines auf Kohlenwasserstoff basierenden wasserabstoßenden Mittels bei einer Temperatur von 40 - 96 °C, worin das Aluminosilikatmaterial aufgrund des Verbrennens von Kohlenstaub in Industrieöfen mit Entfernung von flüssiger Schlacke als Abfall gebildet wurde, und die Behandlung mit wasserabstoßendem Mittel Kohlenwasserstoffe umfasst, gebildet als Abfälle der Ölindustrie oder der Holzchemie-Industrie, wobei das Verhältnis von Aluminosilikatmaterial zu Wasser zu wasserabstoßendem Mittel 1 : (1 - 5) : (0,001 - 0,25) beträgt; und Trocknen des mit wasserabstoßendem Mittel behandelten Aluminosilikatmaterials auf ein konstantes Gewicht bei einer Temperatur von 100 -120 °C.

## Revendications

1. Méthode de nettoyage de fuites de pétrole et de produits pétroliers sur des surfaces, comprenant : le traitement d'une surface polluée par un adsorbant composite, l'adsorbant composite comprenant un matériau d'aluminosilicate formé en tant que produit résiduel de la combustion de poussière de charbon dans des fours industriels avec élimination de laitier liquide, dans laquelle le matériau d'aluminosilicate a été traité par un agent hydrofuge hydrocarboné, formé en tant que produits résiduels de la chimie du bois ou de l'industrie pétrolière, le rapport massique du matériau d'aluminosilicate à l'agent hydrofuge étant de 1:0,001-0,25 ; la séparation du produit pétrolier depuis l'adsorbant par l'agitation de l'adsorbant utilisé avec une solution aqueuse d'ammoniaque ayant une concentration de 1-25%, à une température de 20-90°C, et un rapport d'adsorbant à l'ammoniaque aqueuse de 1:2-1,5 ; et l'extraction du matériau d'aluminosilicate séparé de la surface de l'ammoniaque aqueuse.

2. Méthode selon la revendication 1, dans laquelle l'agent hydrofuge hydrocarboné est choisi parmi : la paraffine de pétrole, la cérésine, le bitume de pétrole pour toitures, revêtement et construction, formés en tant que déchets de l'industrie pétrolière.

3. Méthode selon la revendication 1, dans laquelle l'agent hydrofuge hydrocarboné est choisi parmi : la colophane, le brai de tallol, le tallol, la lessive de sulfate, la lessive de sulfite, formés en tant que déchets de la chimie du bois.

4. Adsorbant pour le nettoyage de fuites de pétrole et de produits pétroliers, dans lequel le matériau adsorbant est capable de flotter à la surface d'un corps d'eau, l'adsorbant comprenant : un matériau d'aluminosilicate formé en tant que produit résiduel de la combustion de poussière de charbon dans des fours industriels avec élimination de laitier liquide, dans lequel le matériau d'aluminosilicate est traité par un agent hydrofuge à base d'hydrocarbure saturé, formé en tant que produits résiduels de la chimie du bois ou de l'industrie pétrolière, le rapport massique du matériau d'aluminosilicate à l'agent hydrofuge étant de 1:0,001-0,25.

5. Adsorbant selon la revendication 4, dans lequel le matériau d'aluminosilicate est constitué de particules en verre sphériques creuses.

6. Adsorbant selon la revendication 4 ou 5, dans lequel le matériau d'aluminosilicate comprend 60-63% en poids de SiO₂ et 20-25% en poids d'Al₂SO₃.

7. Adsorbant selon la revendication 5 ou 6, dans lequel les particules de matériau d'aluminosilicate ont un diamètre de 30-400 microns.

8. Adsorbant selon la revendication 4, 5, 6 ou 7, dans lequel le point de fusion du matériau d'aluminosilicate est dans la plage de 1 250 à 1 400°C.

9. Adsorbant selon l'une quelconque des revendications 4 à 8, dans lequel le matériau d'aluminosilicate a une densité apparente de 0,550-0,750 g/cm³, et une masse volumique apparente de 0,35-0,4 g/cm³.

10. Méthode de fabrication d'un adsorbant pour le nettoyage de pétrole et de produits pétroliers sur des surfaces, la méthode comprenant les étapes : de traitement d'un matériau d'aluminosilicate par une solution aqueuse ou une émulsion d'un agent hydrofuge hydrocarboné à une température de 40-96°C, dans laquelle le matériau d'aluminosilicate a été formé en tant que déchet résultant de la combustion de poussière de charbon dans des fours industriels, avec élimination de laitier liquide, et le traitement d'hydrofugation comprend des hydrocarbures formés en tant que déchets de l'industrie pétrolière ou de l'industrie de la chimie du bois ; le rapport du matériau d'aluminosilicate à l'eau à l'agent hydrofuge étant de 1:(1-5):(0,001-0,25) respectivement ; et de séchage du matériau d'aluminosilicate traité par l'agent hydrofuge jusqu'à un poids constant à une température de 100-120°C.
